# EUROPEAN PATENT APPLICATION

(11) **EP 1 197 146 A1**
(43) Date of publication of application: **17.04.2002**
(21) Application number: 00308985.1
(22) Date of filing: 12.10.2000
(51) Int. Cl.: A01M 25/00

(54) **A pest trap**

(71) Applicant: Rentokil Initial U.K. Limited, East Grinstead, West Sussex RH19 2JY (GB)
(72) Inventor: The designation of the inventor has not yet been filed
(74) Representative: Darby, David Thomas

(57) **Abstract**

A pest trap, especially for a mouse, including an enclosure (1,2) capable of accommodating the pest, an entry port (3) permitting the entry of the pest into the enclosure (1, 2), detector means capable of detecting the presence of the pest in the enclosure (1, 2), signalling means for signalling the detection of the presence of the pest in the enclosure (1, 2), closure means (12a) capable of closing the entry port (3) in response to signalling by the signalling means and container means (4, 5) which, for the operation of the trap, is charged with material capable of producing a product harmful to the pest, the container means (4, 5) including a first container (4) capable of holding a liquid which serves as a component of the material or as an activator for the material and the product harmful to the pest being produced in the enclosure (1, 2) in response to signalling by the signalling means, the first container (4), for the operation of the trap, holding a volume of the liquid and being sealed by a closure member (8).

## Description

The invention relates to pest control especially traps for pests including mice.

It is well established that mice are a pest and the resilience of mice in the face of control methods and apparatus directed against them means that measures effective against mice are effective against other pests. Pest traps directed against mice are effective against other rodents, including rats, and non-rodents including insects and spiders which, like mice, damage goods or property or threaten human health.

The continuing survival of mice as a species results in a continuing need for pest control apparatus and methods directed against mice.

The invention provides a pest trap including an enclosure capable of accommodating the pest, an entry port permitting the entry of the pest into the enclosure, detector means capable of detecting the presence of the pest in the enclosure, signalling means for signalling the detection of the presence of the pest in the enclosure, closure means capable of closing the entry port in response to signalling by the signalling means and container means which, for the operation of the trap, is charged with material capable of providing a product harmful to the pest, the container means including a first container capable of holding a liquid which serves as a component of the material or as an activator for the material and the product harmful to the pest being produced in the enclosure in response to signalling by the signalling means, the first container, for the operation of the trap, holding a volume of the liquid and being sealed by a closure member.

The trap has a set condition and a sprung condition and, when the trap is set, the first container holds the volume of liquid and is sealed by the closure member.

Preferably, the first container is so mounted as to be movable between a first position in which the liquid in the first container is retained in the first container and a second position in which at least some of the liquid in the first container is discharged from the first container.

Preferably, the first container is so mounted in relation to the remainder of the container means that, in operation, the first container is opened as a result of its closure member being dislodged on movement of the first container from its first to its second position.

Preferably, the trap includes blocking means capable of so acting on the closure member of the first container as to open the first container on movement of the first container from a first to a second position and, preferably, the blocking means is included in the container means.

Preferably, the first container and its closure member are separable from each other.

Preferably, the container means includes a receptacle so positioned in relation to the first container as to receive the liquid discharged from the first container.

Preferably, the receptacle, for the operation of the trap, holds a substance in a solid form and, in the operation of the trap, the substance contributes to the generation of the product harmful to the pest.

Preferably, for the operation of the trap, the container means is charged with material which includes a substance capable of serving as an attractant for the pest.

Preferably, for the operation of the trap, the substance capable of serving as an attractant for the target pest contributes to the generation of the product harmful to the pest.

Preferably, for the operation of the trap, the container means is charged with material capable of providing a product which effects acidosis of the blood of the pest.

Preferably, the product harmful to the pest is, at least in the quantity generated by the trap in operation, not harmful to humans if it escapes from the trap into the surrounding atmosphere.

Advantageously, also, the components in the container means that provide the product are, at least in the quantities in the trap, not harmful to humans on accidental contact, including skin surface contact or ingestion.

Accordingly, though the invention includes the generation of poisonous gases or vapours, for example chlorine or hydrogen cyanide, such are not preferred, whereas the generation of an inert gas or a gas generally regarded as inert, for example a gas such as nitrogen, which acts by suffocation, or carbon dioxide, a gas that in high concentrations acts primarily by acidosis, is preferred.

Many reactants that provide carbon dioxide or other appropriate gases are known.

There may be used, for example, two solid reactants that require a solvent, for example, water, to activate them or a solid and a liquid reactant, for example, a solid or liquid reactant in a solvent, for example, water. As examples of solid reactants there may be mentioned carbonates, for example, sodium and potassium carbonates and bicarbonates and carboxylic acids, for example, oxalic and, more especially, hydroxycarboxylic acids, especially fruit acids, for example, citric acid and tartaric acids and their mono-salts.

Acids which are solid at room temperature may be used either as the solid component or in solution. As preferred compositions there may be mentioned a mixture of sodium bicarbonate and citric acid, activated by water, and a solution of citric acid, with the solid component being sodium bicarbonate.

Preferably, the detector means includes a pressure pad capable of detecting a force of the order of a proportion only, for example at most one quarter, of the weight of the pest.

Preferably, the detector means includes a pressure pad of a size allowing the pest to stand fully on it.

Preferably, the trap includes a first and a second entry port and a path between them that is congenial to the pest, the pressure pad being positioned on the path between the ports.

Preferably, the pressure pad includes membrane switch means enclosing an insulating spacer member which serves to maintain switch contact surfaces of the membrane switch means out of contact with each other.

Preferably, the trap includes indicator means capable of indicating that the detector means has been activated and capable of maintaining the indication.

Preferably, the trap includes means capable of providing an indication, at the trap, that the detector means has been activated.

Preferably, the trap includes means capable of providing an indication, at a position remote from the trap, that the detector means has been activated.

The invention provides a method of trapping a pest including the steps of:
providing an enclosure capable of accommodating the pest,
providing an entry port in the enclosure permitting the entry of the pest into the enclosure,
providing detector means capable of detecting the presence of the pest in the enclosure,
providing signalling means for signalling the detection of the presence of the pest in the enclosure,
providing closure means capable of closing the entry port in response to signalling by the signalling means,
providing container means including a first container capable of holding a volume of a liquid,
charging the container means with material capable of providing a product harmful to the pest including charging the first container with a volume of a liquid which serves as a component of the material or as an activator for the material,
sealing the first container by a closure member and
producing the product harmful to the pest in the enclosure by releasing the liquid from the first container and causing the liquid to contact the rest of the material in the container means in response to signalling by the signalling means.

Preferably, the method includes the step of moving the first container between a first position in which the liquid is retained in the first container and a second position in which the liquid is caused to escape from first container as a result of the orientation of the first container and its separation from its closure member.

Preferably, the method includes the step of charging the container means with reactants that, in operation, generate carbon dioxide.

Preferably, the method includes the step of charging the first container with a solution of citric acid and a receptacle of the container means with sodium bicarbonate.

A trap constructed in accordance with the invention, for trapping a mouse, will now be described, by way of example only, with reference to the accompanying drawings in which:
Fig. 1 shows a perspective view of the exterior of an enclosure, which includes an upper part and a lower part, of a mouse trap in accordance with the invention,
Fig. 2 shows a perspective view of the lower part of the enclosure of Fig. 1 without the upper part,
Fig. 3 shows an exploded perspective view of the mouse trap of Fig. 1 revealing the components of the mouse trap,
Fig. 4 shows a perspective view of movable parts of the mouse trap of Fig. 1 in the set condition,
Fig. 5 shows a perspective view of the movable parts of the mouse trap of Fig. 1 in the sprung condition,
Fig. 6 shows a cross-section of a first form of the mouse trap taken along a line passing through the centre of the mouse trap,
Fig. 7 shows a closure member for a first container included in the mouse trap,
Fig. 8 shows a cross-section of an alternative form to that of Fig. 6 for the mouse trap taken along a line passing through the centre of the mouse trap and
Fig. 9 is a circuit diagram representing an electrical control circuit included in the mouse trap of Fig. 1.

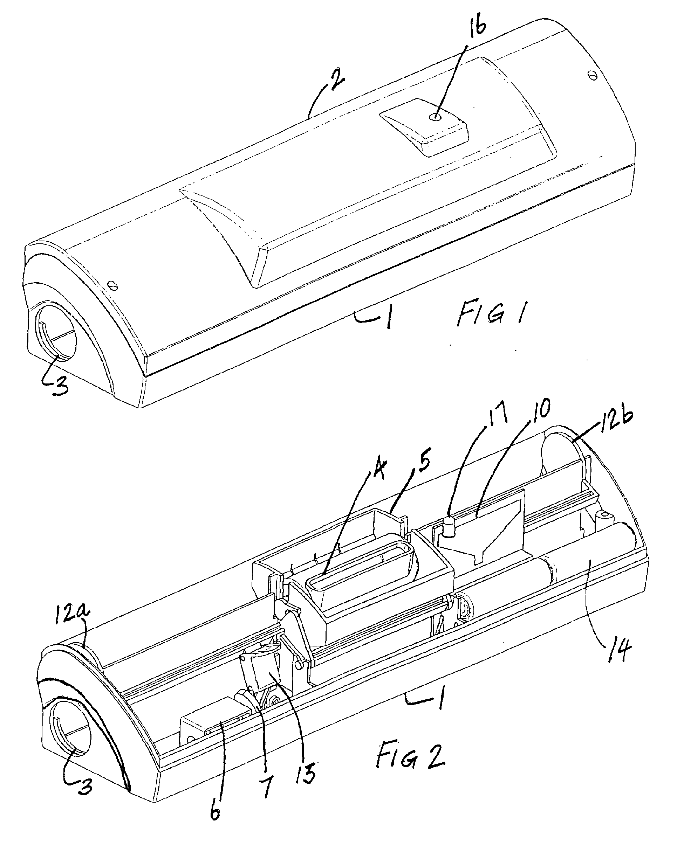

Referring to Fig. 1 of the accompanying drawings, the mouse trap includes an enclosure which is divided into a lower part 1 and an upper part 2. When the enclosure is viewed from the exterior, an entry port 3 is visible in the left side of the lower part 1 of the enclosure as viewed and an indicator port 16 is visible in the top of the upper part 2 of the enclosure.

Referring to Fig. 2 of the accompanying drawings, the lower part 1 of the enclosure accommodates a first container 4, a receptacle 5 which supports the first container 4, a solenoid 6, an actuator 7, an electrical control circuit accommodated on a printed circuit board 10, a first closure member 12a for closing the entry port 3, a second closure member 12b for closing another entry port which is not shown, a battery pack 14 and an upper pivot 15. The electrical control circuit includes a light-emitting diode 17 which is so positioned as to be visible through the indicator port 16 in the upper part 2 of the enclosure when the first and second parts 1, 2 of the enclosure are together.

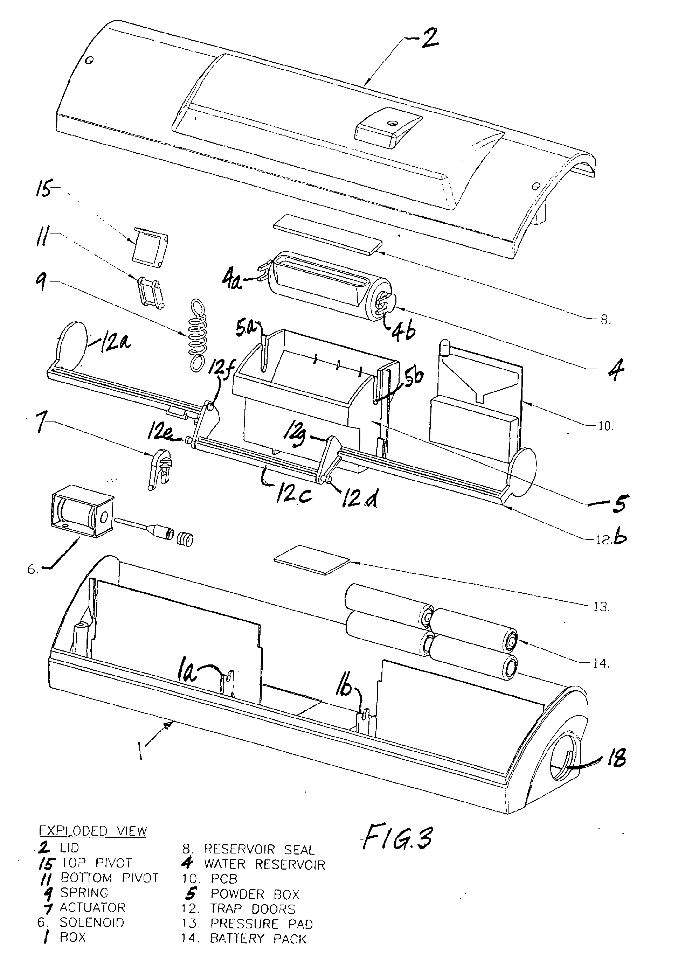

Referring to Fig. 3 of the accompanying drawings, a bottom pivot 11 is connected to the top pivot 15 which is connected to a crank member 12c at the extremities of which lie the first and second closure members 12a, 12b. The end of the bottom pivot 11 which is remote from the connection to the top pivot 15 is connected to the base of the first part 1 of the enclosure and a spring 9 is so connected between the top and bottom pivots 15, 11 as to supply motive power capable of rotating the crank member 12c. The crank member 12c includes a pair of support lugs 12d, 12e which engage in support members 1a, 1b belonging to the lower part 1 of the enclosure and a pair of driving lugs 12f, 12g. The first container 4 is generally cylindrical in form, includes end faces and is so mounted that lugs at its end faces, on the longitudinal axis of the cylinder, engage in support grooves 5a, 5b which lie in side members of the receptacle 5. Forked members 4a, 4b which lie outboard of the lugs at the end faces of the first container 4 are engaged by the pair of driving lugs 12f, 12g on the crank member 12c. The first container 4 includes an aperture at its top, as viewed, and a removable closure member 8 (see Fig. 6) seals the first container 4. A pressure pad 13 is electrically connected to and serves as a sensor for the electrical control circuit.

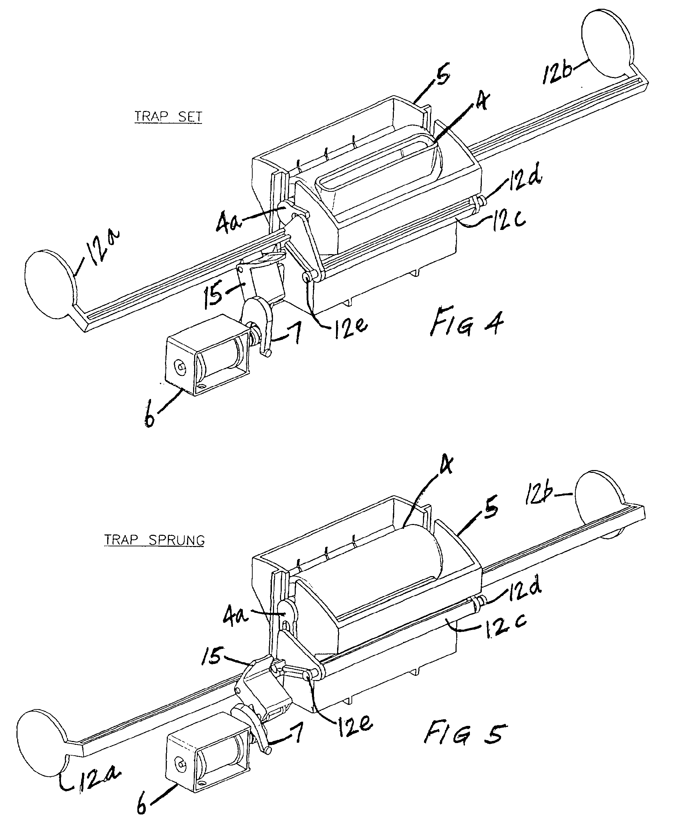

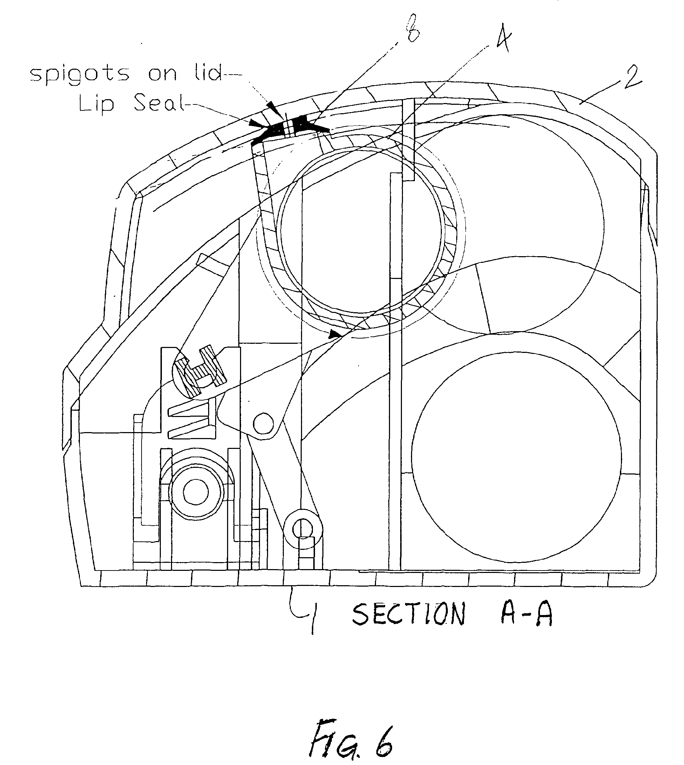

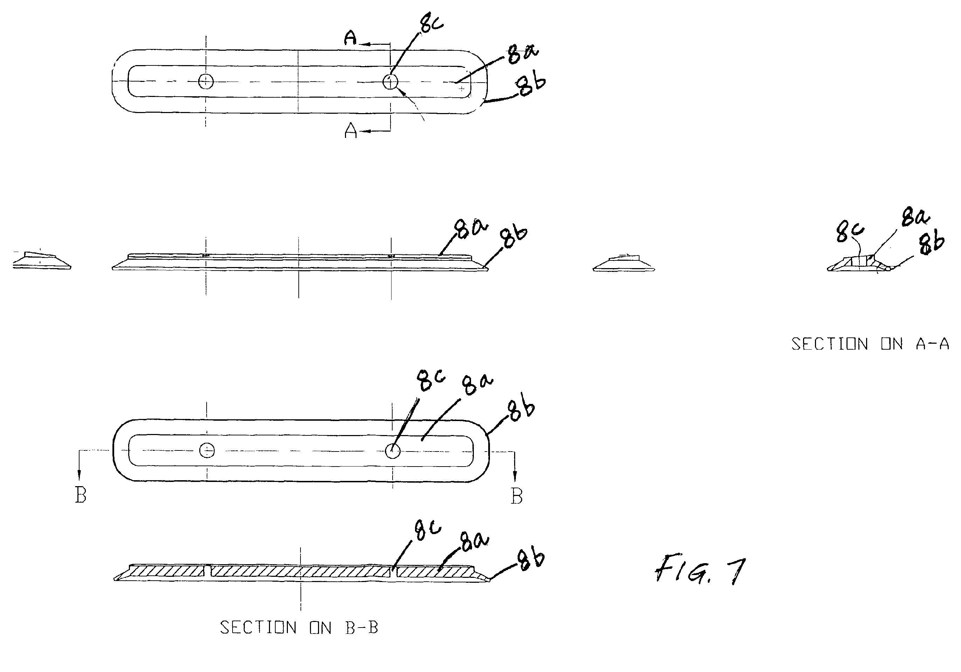

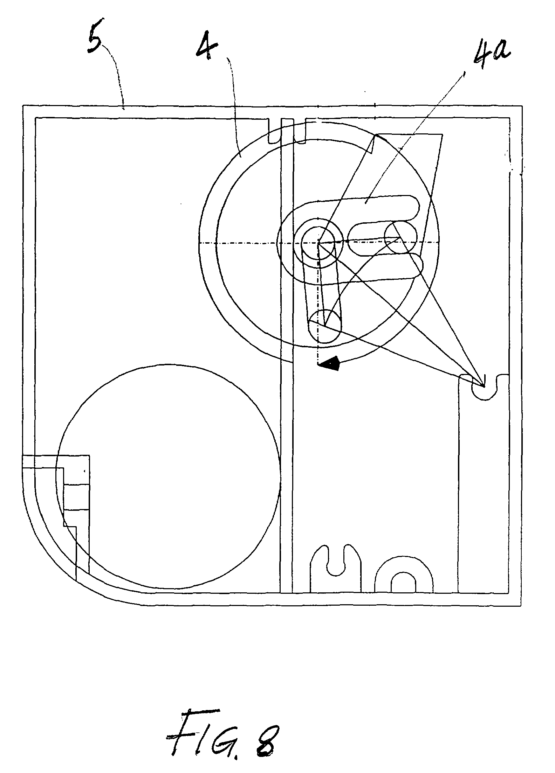

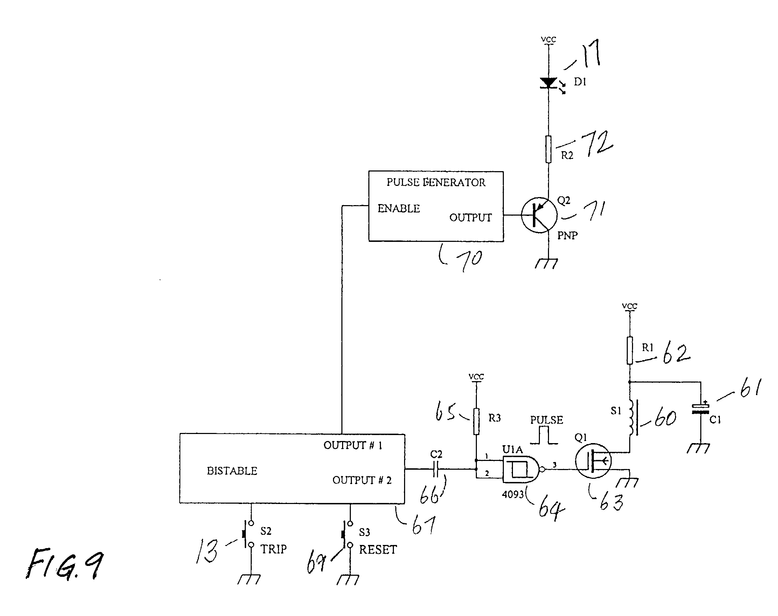

Referring to Fig. 4 of the accompanying drawings, when the trap is set, the top pivot 15 is being pulled downwards, as viewed, by the spring 9 (not visible) and transmits the downward force to the crank member 12c to which the top pivot 15 is pivotally connected. The crank member 12c is prevented from moving at this time by the actuator 7 which is held in position by the solenoid 6. The orientation of the first container 4 is such that its aperture is uppermost, as viewed, and its forked members 4a, 4b point forwards, as viewed. Although not so shown in Fig. 4, the aperture in the first container 4 is sealed by the closure member 8.

Referring to Fig. 5 of the accompanying drawings, the trap is sprung by drawing back the actuator 7 by means of the solenoid 6, permitting the top pivot 15 to rotate the crank member 12c about the support lugs 12d, 12e and causing the forked members 4a, 4b to be moved from pointing forwards to pointing downwards, as viewed, resulting in the rotation of the first container 4 about its mountings. The orientation of the first container 4 is now such that a liquid in the first container 4 escapes through the aperture into the receptacle 5. The first container 4, the receptacle 5, the aperture in the first container 4 and the removable closure member 8 are so contoured and positioned in relation to one another that, when the trap is sprung, the rotation of the first container 4 results in the removable closure member 8 being lifted off the aperture by contact with the receptacle 5.

Referring to Fig. 6 of the accompanying drawings, a cross-section of the trap shows the first and second parts 1, 2 and the generally cylindrical first container 4, the aperture in which is closed by the removable closure member 8.

Referring to Fig. 7 of the accompanying drawings, the removable closure member 8 includes a rectangular body portion 8a which is surrounded by a rectangular flange portion 8b. The body portion 8a includes apertures 8c. The closure member 8 is constructed entirely of resilient material.

Referring to Fig. 8 of the accompanying drawings, a cross-section of the trap shows an alternative, more forward as viewed, position of the aperture in the first container 4 in relation to the receptacle 5.

Referring to Fig. 9 of the accompanying drawings, the electrical control circuit includes an actuating coil 60 of the solenoid 6 one terminal of which is connected to a capacitor 61 and to the positive terminal of a voltage source Vcc by way of a resistor 62. The other terminal of the coil 60 is connected to the drain terminal of an insulated gate field effect transistor (FET) 63 the source terminal of which is connected to the negative terminal of the voltage source Vcc. The gate terminal of the FET is connected to the output port of a first pulse generator circuit which includes a buffer stage 64, a capacitor-resistor (CR) network 65, 66 and a driver stage 67. The driver stage 67 is connected to be triggered by a signal from the pressure pad 13 and to be reset by a local switch 69. The driver stage 67 is connected also to drive a second pulse generator circuit 70 which, in turn, drives the light emitting diode 17 by way of a transistor driver stage including a bipolar transistor 71 and a resistor 72. Once triggered, the second pulse generator circuit 70 remains activated and the light emitting diode remains illuminated, allowing visual inspection of the state of the trap, that is, whether "set" or "sprung."

In the operation of the trap, a mouse enters by way of one of the ports 3 or 18 and is guided towards the pressure pad 13. Once the mouse steps on the pressure pad 13, the first pulse generator circuit is activated and drives the FET 63 into its conductive state. The capacitor 61 has already been charged to the voltage Vcc through the resistor 62 and, as the FET becomes conductive, the capacitor 61 discharges through the coil 60 of the solenoid 6 in addition to the resistor 62 conducting current into the coil 60. The current through the coil 60 operates the solenoid 6 which, in turn, releases the actuator 7 and springs the trap. As the trap is sprung, the spring 9 rotates the crank member 12c to close the ports 3, 18 and, at the same time, the crank member 12c rotates the first container 4, separating it from the closure member 8 and tipping the liquid contents of the first container 4 into the receptacle 5. Once the trap is sprung, the LED 17 remains illuminated. The LED is not illuminated when the trap is in a set condition and the state of the trap may be ascertained by inspection of the LED.

The electrical control system may, additionally, provide an indication of the state of the trap at a remote location such a central monitoring position by means of a wireless link.

In the operation of the trap, the first container 4 and the receptacle 5 contain substances which, when mixed, generate a gas, such as carbon dioxide, harmful to the pest. One of the substances is a liquid which is stored in the first container 4. The generation of carbon dioxide in the trap effects acidosis of the blood of the pest.

One choice of the substances leads to the first container 4 to containing water and the receptacle 5 to containing a mixture of citric acid and sodium bicarbonate in solid form. An alternative choice of substances leads to the first container 4 containing a citric acid solution and the receptacle 5 containing sodium bicarbonate in solid form.

The inclusion of the first container 4 as a sealed container minimises evaporation of the liquid contents of the first container 4, resulting in a trap which remains effective for a significant time without the need for maintenance.

There need be only one input port to the trap since the principal purpose of the input port is to provide a mouse with access into the trap. It is envisaged that traps would be positioned along mouse "runs" in which case the ports serve as entry and exit ports. It is known that mice and other rodents find tight-fitting spaces congenial and passages may be provided between the ports so dimensioned as to be congenial to a mouse.

The inclusion of the pressure pad 13 provides a combination of high sensitivity and high selectivity for the trap. The pressure pad 13 is highly sensitive because, in the embodiment designed for trapping mice, it is so constructed as to detect weights of between 3 grams and 30 grams, both limits included, which covers mice ranging from immature to fully grown. The pressure pad 13 is, at the same time, highly selective because it is relatively insensitive to external effects such as, for example, shock caused by the trap being struck or violently displaced.

An important requirement of the pressure pad 13 is that it should be large enough for a mouse to stand on it in order to maximise the probability of detecting the presence of a mouse in the trap. An especially suitable form of the pressure pad 13 is disclosed in International Patent Publication No. WO 98/18318, which is hereby incorporated by reference, the pressure pad including membrane switch means enclosing an insulating spacer member which serves to maintain switch contact surfaces of the membrane switch means out of contact with each other even though the switch contact surfaces may sag. The inclusion of the insulating spacer member results in a relatively large membrane switch in which a tendency for the switch contact surfaces to sag into contact with each other is resisted by the insulating spacer member.

Although the pressure pad 13 may be large enough for a mouse to stand on it, the sensitivity of the pressure pad 13 remains such that it will detect the force exerted on it should a mouse place one paw on it. On the basis that the force exerted one paw of a quadruped, such as a mouse, amounts to about a quarter of its weight, the pressure pad 13 is capable of detecting a force of the order of a quarter of the weight of an average weight mouse.

## Claims

1. A pest trap including an enclosure capable of accommodating the pest, an entry port permitting the entry of the pest into the enclosure, detector means capable of detecting the presence of the pest in the enclosure, signalling means for signalling the detection of the presence of the pest in the enclosure, closure means capable of closing the entry port in response to signalling by the signalling means and container means which, for the operation of the trap, is charged with material capable of providing a product harmful to the pest, the container means including a first container capable of holding a liquid which serves as a component of the material or as an activator for the material and the product harmful to the pest being produced in the enclosure in response to signalling by the signalling means, the first container, for the operation of the trap, holding a volume of the liquid and being sealed by a closure member.

2. A trap as claimed in claim 1, wherein the first container is so mounted as to be movable between a first position in which liquid in the first container is retained in the first container and a second position in which liquid in the first container is discharged from the first container.

3. A trap as claimed in claim 2, wherein the first container is so mounted in relation to the remainder of the container means that, in operation, the first container is opened as a result of its closure member being dislodged on movement of the first container from its first to its second position.

4. A trap as claimed in any one of claims 1 to 3, including blocking means capable of so acting on the closure member of the first container as to open the first container on movement of the first container from a first to a second position.

5. A trap as claimed in claim 4, wherein the blocking means is included in the container means.

6. A trap as claimed in any one of claims 1 to 5, wherein the first container and its closure member are separable from each other.

7. A trap as claimed in any one of claims 1 to 6, wherein the container means includes a receptacle so positioned in relation to the first container as to receive liquid discharged from the first container.

8. A trap as claimed in claim 6, wherein the receptacle, for the operation of the trap, holds a substance which, in the operation of the trap, contributes to the generation of the product harmful to the pest, the substance being in a solid form.

9. A trap as claimed in any one of claims 1 to 8, wherein, for the operation of the trap, the container means is charged with material which includes a substance capable of serving as an attractant for the pest.

10. A trap as claimed in claim 9, wherein, for the operation of the trap, the substance capable of serving as an attractant for the pest contributes to the generation of the product harmful to the pest.

11. A trap as claimed in any one of claims 1 to 10, wherein, for the operation of the trap, the container means is charged with material capable of providing a product which effects acidosis of the blood of the pest.

12. A trap as claimed in any one of claims 1 to 11, wherein the product harmful to the pest is, at least in the quantity generated by the trap in operation, not harmful to humans if it escapes from the trap into the surrounding atmosphere.

13. A trap as claimed in any one of claims 1 to 12, wherein the components in the container means that provide the product are, at least in the quantities in the trap, not harmful to humans on accidental contact, including skin surface contact or ingestion.

14. A trap as claimed in any one of claims 1 to 13, wherein the product harmful to the pest includes carbon dioxide.

15. A trap as claimed in any one of claims 1 to 14, wherein the container means, for the operation of the trap, is charged with two solid reactants that require a solvent to activate them and the first container contains a solvent that activates the solid reactants.

16. A trap as claimed in claim 15, wherein the container means is charged with citric acid mixed with sodium bicarbonate in solid form and the first container contains water.

17. A trap as claimed in any one of claims 1 to 14, wherein the container means, for the operation of the trap, is charged with a solid reactant and a liquid reactant material.

18. A trap as claimed in claim 17, wherein the liquid reactant material comprises a solid or liquid reactant in a solvent.

19. A trap as claimed in claim 17, wherein the solid reactant includes sodium bicarbonate and the liquid reactant material includes a citric acid solution.

20. A trap as claimed in claim 17 or claim 18, wherein the solid reactant includes a carbonate or bicarbonate.

21. A trap as claimed in claim 17 or claim 18, wherein the solid reactant includes a carboxylic acid.

22. A trap as claimed in claim 21, wherein the solid reactant includes oxalic or hydroxycarboxylic acid.

23. A trap as claimed in claim 21, wherein the solid reactant includes citric acid.

24. A trap as claimed in any one of claims 1 to 23, wherein the detector means includes a pressure pad capable of detecting a force of the order of a quarter of the weight of the pest.

25. A trap as claimed in any one of claims 1 to 24, wherein the detector means includes a pressure pad of a size allowing the pest to stand fully on it.

26. A trap as claimed in claim 24 or claim 25, including a first and a second entry port and a path between them that is congenial to the pest, the pressure pad being positioned on the path between the ports.

27. A trap as claimed in any one of claims 24 to 26, wherein the pressure pad includes membrane switch means enclosing an insulating spacer member which serves to maintain switch contact surfaces of the membrane switch means out of contact with each other.

28. A trap as claimed in any one of claims 1 to 27, including indicator means capable of indicating that the detector means has been activated and capable of maintaining the indication that the detector means has been activated.

29. A trap as claimed in claim 28, including means capable of providing an indication at the trap that the detector means has been activated.

30. A trap as claimed in claim 28 or claim 29, including means capable of providing an indication at a position remote from the trap that the detector means has been activated.

31. A trap as claimed in any one of claims 1 to 30 for a mouse.

32. A method of trapping a pest including the steps of:
providing an enclosure capable of accommodating the pest,
providing an entry port in the enclosure permitting the entry of the pest into the enclosure,
providing detector means capable of detecting the presence of the pest in the enclosure,
providing signalling means for signalling the detection of the presence of the pest in the enclosure,
providing closure means capable of closing the entry port in response to signalling by the signalling means,
providing container means including a first container capable of holding a volume of liquid,
charging the container means with material capable of providing a product harmful to the pest including charging the first container with a volume of a liquid which serves as a component of the material or as an activator for the material,
sealing the first container by a closure member and
producing the product harmful to the pest in the enclosure by releasing the liquid from the first container and causing the liquid to contact the rest of the material in the container means in response to signalling by the signalling means.

33. A method as claimed in claim 32, including the step of moving the first container between a first position in which the liquid is retained in the first container and a second position in which the first container and its closure member become separated from each other.

34. A method as claimed in claim 32 or claim 33, including the step of charging the container means with reactants that, in operation, generate carbon dioxide.

35. A method as claimed in any one of claims 32 to 34, including the step of charging the first container with a solution of citric acid and charging a receptacle of the container means with sodium bicarbonate.
